# EUROPEAN PATENT SPECIFICATION

(11) **EP 3 896 301 B1**
(45) Date of publication and mention of the grant of the patent: **08.11.2023**
(21) Application number: 19896994.1
(22) Date of filing: 05.07.2019
(51) Int. Cl.: F16C 35/00, F16C 3/02, F16C 19/54, F16C 35/04, F16B 11/00

(54) **ASSEMBLY METHOD FOR HIGH-SPEED ROTOR**
MONTAGEVERFAHREN FÜR HOCHGESCHWINDIGKEITSROTOR
PROCÉDÉ D'ASSEMBLAGE DE ROTOR À GRANDE VITESSE

(30) Priority: 14.12.2018 CN 201811529916
(43) Date of publication of application: 20.10.2021
(73) Proprietor: Ningbo WTOO Machinery & Technology Co., Ltd, Zhenhai Ningbo, Zhejiang 315202 (CN)
(72) Inventor: LIU, Kai, Ningbo, Zhejiang 315202 (CN); LOU, Zhiwei, Ningbo, Zhejiang 315202 (CN); LIU, Zhenglong, Ningbo, Zhejiang 315202 (CN); WEI, Wei, Ningbo, Zhejiang 315202 (CN)
(74) Representative: ZHAOffice SPRL
(86) International application number: PCT/CN2019/094845
(87) International publication number: WO 2020/119094

(56) References cited:
- CN-A- 102 414 451
- CN-A- 108 006 197
- CN-A- 109 538 638
- CN-Y- 2 336 129
- JP-A- H09 151 975
- JP-A- 2001 041 253
- JP-A- 2009 264 432
- JP-A- 2010 065 761
- JP-A- 2015 152 073

## Description

### Field of Technology

The present invention belongs to the field of mechanical transmission and relates to a method of assembly of a high-speed rotor.

### Background of the Invention

Rotor is a rotary body supported by bearings, most of which are the main rotatory parts in power machines and working machines. The ongoing development of the mechanical field has led to a growing number of high-speed machines, posing a strict requirement for rotors. Existing rotors generally comprises rotary shaft, bearings, pre-tightening spring, and bushing. Bearings are usually disposed on the rotary shaft at a certain interval, both are pre-tightened by a pre-tightening spring, the exterior of bearing is nested with a bushing. For example, the patent invention application "Rotor Assembly", under the patent invention application number CN102414451A as disclosed in China patent publications, date of publication: 11 April 2012, comprises a pair of bearings disposed at a certain interval, both are enclosed by sleeve, two bearings are provided with a preloaded spring. Illustrating another example, the patent invention application "Motor", under the patent invention application number CN106877556A as disclosed in China patent publications, date of publication: 20 June 2017, also discloses a rotor comprising a shaft, a pair of bearings are disclosed thereon at a certain interval, and a spring disposed between two bearings, but the outer sleeve is left out, because the outer sleeve is designed as one-piece with the motor frame. As disclosed in the above two publications, both bearings are pre-tightened by a spring, any of the two alternatives is viable, but some deficiencies are found if the pre-tightening force is produced by spring: 1. The pre-tightening force is not so stable, the spring always changes dynamically due to rotor vibrations in operation, its pre-tightening force would change in a wide range, resulting in a substantial change of the working state of bearings. As a consequence, the rotor may be vulnerable to poor stability of operation, and the spring is likely to cause a failure of pre-tightening force due to suspended period of use or aging. 2. Coaxiality is guaranteed by pre-tightening of spring and mating with the outer bushing, but this is not a reliable alternative, the coaxiality of the outer ring of bearings on the rotary shaft is primarily guaranteed by the outer bushing, which has a strict requirement for the processing accuracy of outer bushing hole. If the error of outer bushing hole or relative clearance with the outer ring of bearings is large, the coaxiality of the outer ring of bearings on the rotary shaft will be poor, compromising the reliability of spring pre-tightening and further exposing Deficiency 1 as described above. 3. It is more difficult to assemble bearings on the rotary shaft, an external mechanism is needed to always retain the pre-tightening force of spring.

JP 2015 152073 A discloses a rolling bearing device which includes inner rings and outer rings disposed coaxially, and a plurality of rolling bodies disposed at intervals in a circumferential direction in annular space between these inner rings and outer rings. The rolling bearing device also includes two rolling bearings arrayed at intervals in an axial direction and a shaft which has a flange part protruding outwardly in a radial direction, and which is fixed on an inner peripheral surface of these inner rings by an adhesive agent while being fitted to the inner rings of the two rolling bearings and one end of one inner ring is abutted against the flange part.

JP 2009 264432 A discloses a method for manufacturing a bearing unit by fixing the member to be fixed and the bearing with an anaerobic adhesive. The member to be fixed has a recessed groove in a fixing portion at least for fixing the bearing.

JP 2001 041253 discloses that for bonding a shaft to a bearing, outer peripheries, of the shaft are coated with adhesives, and then the bearing is inserted outside the shaft. Most of applied adhesives are held in first adhesive holding grooves and bulging-out partial adhesives go to second adhesive holding grooves and are held there.JP 2010 065761 A discloses a rolling bearing unit including a rolling bearing having a plurality of rolling elements built in an annular space between an inner ring and an outer ring coaxially arranged in peripherally spaced relation, a shaft to be adhered to the inner ring of the rolling bearing in a fitted state, and a sleeve having a fitting hole into which the outer ring of the rolling bearing is adhered in a fitted state.

### BRIEF SUMMARY AND OBJECTS OF THE INVENTION

For overcoming the above deficiencies, the object of the prevent invention is to provide a method to assemble a high-speed rotor, such that poor pre-tightening stability of similar rotor types and inconvenience of pre-tightening assembly can be solved. Its object can be achieved by the following technical solution.

The invention is as set out in the appended claim.

A high-speed rotor, not part of the claimed invention, can comprise a rotary shaft, first bearing, second bearing, and an inner bushing. The inner bushing is cylindrical shape, first bearing and second bearing are of the same size; wherein, the said first bearing and second bearing are nested in the said rotary shaft at a certain interval, and the inner ring of the first bearing has one end against the staircase section of the rotary shaft for space limit; the said inner bushing that provides pre-tightening force onto the end faces of the outer rings of first bearing and second bearing is disposed between first bearing and second bearing; gluing grooves are disposed at the point where the said rotary shaft is joined to first bearing and second bearing, and the rotary shaft is glued securely to first bearing and second bearing by applying the glue in gluing grooves. When gluing, the said inner bushing retains the pre-tightening force against the end faces of the outer rings of first bearing and second bearing. Within the said structure, the inner bushing is pressed against the outer ring of bearings on both ends, and a pre-tightening force is loaded on bearings during the glue hardening. This alternative replaces the cumbersome process of applying pre-tightening force on bearings with a spring. Furthermore, the pre-tightening force is retained by inner bushing instead of spring, which can reduce the range of dynamic change and improve the pre-tightening stability, thus improving the working stability of bearings. In addition, this structure keeps the coaxiality of the outer ring of bearings on both ends by the ends of the inner bushing. Compared with the current alternative of keeping the coaxiality of the outer ring of bearings with outer bushing, the processing accuracy of both ends of inner bushing is easier to guarantee than that of outer bushing hole. This can guarantee the coaxiality of the outer ring of bearings on both ends and improve the working stability of bearings.

In the said high-speed rotor, the said gluing groove is an annular groove, and at least two annular grooves are provided respectively at the points where the rotary shaft (1) matching first bearing and second bearing. This structure can improve the gluing stability and provide better pre-tightening retention force against bearings.

In the said high-speed rotor, the said inner bushing has at least two ends cylindrical shaped, and the outer diameter of the cylindrical on both ends are the same as that of the said first bearing and second bearing, and the outer diameter of the rest part of the inner bushing is less than, or equal to that of the cylindrical on both ends. Within this structure, the inner bushing functions as locating coaxially the outer rings of bearings on both ends, and its form and shape should be such that processing is easy and the processing accuracy can be guaranteed.

In the said high-speed rotor, the exterior of the said inner bushing is movably nested a matching outer bushing, the said first bearing and second bearing are nested respectively on both ends of the outer bushing, and the outer rings of first bearing and second bearing are glued securely with the inner wall of the outer. This outer bushing mainly functions as protecting and further stabilizing the bearings.

In the said high-speed rotor, the inner bushing and the outer bushing are of cylindrical shape. This structure is easy to process and assemble.

In an alternative method of assembling the said high-speed rotor, not part of the claimed invention, the said rotary shaft is provided with the said staircase section, and fixed with the gluing grooves matching the said first groove and second groove. The assembly process includes the following steps: I. Apply glue to the gluing groove fixed on the rotary shaft matching first bearing, then fix the first bearing in the matching area of the gluing groove, and limit the space between the inner ring of first bearing and one end of the staircase section of the rotary shaft, keep the rotary shaft vertically support the first bearing until the rotary shaft is glued securely to first bearing: II. Apply glue to both ends of the said inner bushing, apply glue to the gluing groove on the rotary shaft matching second bearing as described in Step 1, load inner bushing and second bearing into the vertical rotary shaft, and press both ends of the inner bushing against the end faces of the outer rings of first bearing and second bearing for pre-tightening, second bearing is glued to the gluing groove where it matches the rotary shaft; III. Before the rotary shaft is glued securely to second bearing and the inner bushing is glued securely to first bearing and second bearing as described in Step 2, nest a standard outer bushing, nest a pre-tightening weight on top of the rotary shaft, the said pre-tightening weight applies a pre-tightening load on the end face of the inner ring of second bearing, until the rotary shaft is glued securely to second bearing and the inner bushing is glued securely to first bearing and second bearing. After the glue hardening, dismount the standard outer bushing and the pre-tightening weight, the high-speed rotor is now successfully assembled. For the purpose of this assembly method, bearings are pre-tightened by the loading of pre-tightening force with a pre-tightening weight, coupled with the glue hardening time. Unlike the current pre-tightening force with a spring, this alternative can eliminate the instability of the spring pre-tightening loading during the assembly process, improve stability and reliability of assembly, and guarantee the quality of assembly and stability of finished product operation. In the said assembly method of high-speed rotor, the glued ends of the said inner bushing are replaced to non-glued ends. This structure can achieve the same object as well. The glued ends of the inner bushing function as pre-stabilizing and reducing difficulty of operation. In case of non-glued ends, the operation process is required to be more stable. Although it is slightly more difficult to achieve, but the steps and working hours involved can be reduced.

Another alternative method of assembling the said high-speed rotor is provided according to the invention, wherein the said staircase section is disposed on the said rotary shaft, and fixed with the gluing groove matching the said first groove and second groove. The assembly process includes the following steps: I. Apply glue to the gluing groove fixed on the rotary shaft matching first bearing, then fix the first bearing in the matching area of the gluing groove, and limit the space between the inner ring of first bearing and one end of the staircase section of the rotary shaft, keep the rotary shaft vertically support the first bearing until the rotary shaft is glued securely to first bearing; II. Take a standard bearing part with the same size as the second bearing and an outer bushing nested into the outer ring of second bearing, vertically nest the outer bushing into the standard bearing part, then place the said inner bushing into the outer bushing such that it is pressed against the end face of the outer ring of the standard bearing part, apply glue on the outer ring face of second bearing, then place in the outer bushing, press the end face of the outer ring of second bearing against the end face of the inner bushing for space limit, stand still until the outer ring face of second bearing is securely glued to the inner wall of the outer bushing; III. Apply glue to the outer ring face of first bearing and the gluing groove of the matching second bearing on the rotary shaft as described in Step 1, mate the outer bushing, second bearing, and inner bushing as described in Step 2 with the said rotary shaft and first bearing, press first bearing and second bearing against both ends of the inner bushing, and insert the first bearing into the outer bushing, keep the staircase section of the rotary shaft vertically supporting first bearing, inner bushing and second bearing. Before the glue in the gluing groove matching the second bearing is hardened, nest a pre-tightening weight on top of the vertical support of the rotary shaft, the said pre-tightening weight applies a pre-tightening load on the end face of the inner ring of the said second bearing, until the first bearing and second bearing are securely glued to the rotary shaft. After the glue hardening, dismount the pre-tightening weight, the high-speed rotor is now successfully assembled.

This method is mainly different from the above-mentioned method is the gluing of the outer bushing. In actual application, there are two product types, one is product without outer bushing, the other is product with outer bushing. Product without outer bushing often matches the mechanical structure integrated with outer bushing structure of high accuracy; in contrast, product with outer bushing often matches the mechanical structure without outer bushing or matches the case with inaccurate mounting hole of outer bushing, where it is necessary to equip the rotor with outer bushing for mounting accuracy.

The present invention is structurally simple and easy to assemble and process, which improves the pre-tightening stability of bearings on the rotary shaft and guarantees the coaxiality of the bearing assembly, resulting in better stability and reliability of rotor operation, lower noise level, and longer service life. It is suitable to use as a high-speed rotor in vacuum cleaners, compressors and other mechanical fields, or for structural enhancement of similar products.

### Brief Description of the Drawings

FIG. 1 is a schematic diagram of partial cross-sectional view of Alternative 1.
FIG. 2 is a schematic diagram of the 3D structure of Alternative 1.
FIG.3 is the structural schematic view 1 of the assembled condition of Alternative 1, wherein a partial cross-sectional view is made.
FIG.4 is the structural schematic view 2 of the assembled condition of Alternative 1, wherein a partial cross-sectional view is made.
FIG.5 is the structural schematic view 3 of the assembled condition of Alternative 1, wherein a partial cross-sectional view is made.
FIG.6 is the structural schematic view 4 of the assembled condition of Alternative 1, wherein a partial cross-sectional view is made.
FIG.7 is a schematic diagram of partial cross-sectional view of Alternative 2.
FIG. 8 is a schematic diagram of the 3D structure of Alternative 2.
FIG.9 is the structural schematic view 1 of the assembled condition of Alternative 2.
FIG.10 is the structural schematic view 1 of the assembled condition of Alternative 2, wherein a partial cross-sectional view is made.
FIG.11 is the structural schematic view 3 of the assembled condition of Alternative 2, wherein a partial cross-sectional view is made.
FIG.12 is the structural schematic view 4 of the assembled condition of Alternative 2, wherein a partial cross-sectional view is made.

Serial number and name as shown in above figures: 1. Rotary shaft, 101. Staircase section, 102. Gluing groove, 2. First bearing, 3. Second bearing, 4. Inner bushing, 5. Standard outer bushing, 6. Rotary shaft frame, 7. Pre-tightening weight, 8. Outer bushing, 9. Standard bearing part.

### Description of the Embodiments

The present invention is now further described with reference with the drawings.

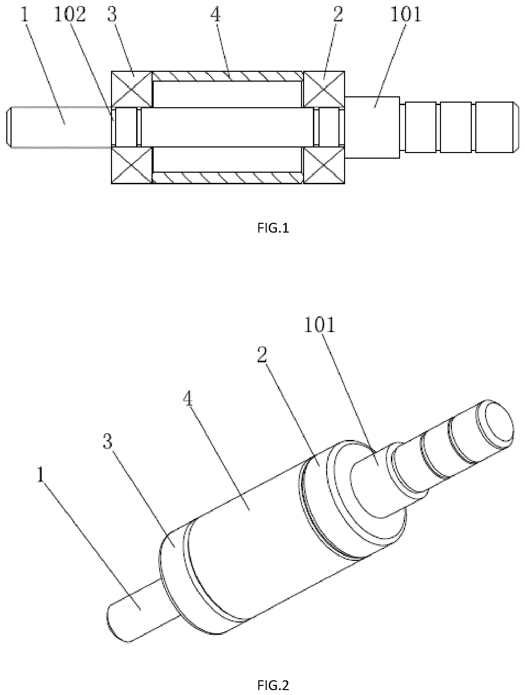

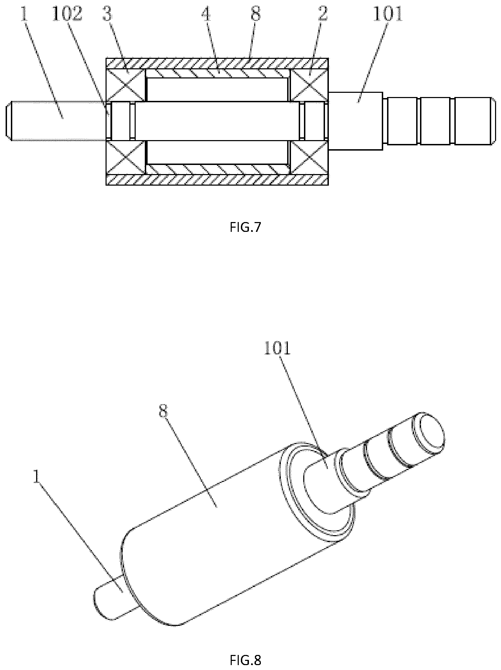

FIG.1 and 2 present the structural view of Alternative 1, not part of the invention, which comprises a rotary shaft 1, first bearing 2, second bearing 3, and an inner bushing 4. The inner bushing is cylindrical shape, first bearing and second bearing are of the same size; wherein, the said first bearing and second bearing are nested in the said rotary shaft at a certain interval, and the inner ring of the first bearing has one end against the staircase section 101 of the rotary shaft for space limit; the said inner bushing that provides pre-tightening force onto the end faces of the outer rings of first bearing and second bearing is disposed between first bearing and second bearing; gluing grooves 102 are disposed at the point where the said rotary shaft is joined to first bearing and second bearing, and the rotary shaft is glued securely to first bearing and second bearing by applying the glue in gluing grooves. When gluing, the said inner bushing retains the pre-tightening force against the end faces of the outer rings of first bearing and second bearing. FIG.7 and 8 present the structural view of Alternative 2, its structure is different from Alternative 1 in that first bearing, second bearing, exterior of inner bushing are nested with cylindrical outer bushing, and the outer rings of first bearing and second bearing are glued securely to the inner walls of outer bushing.

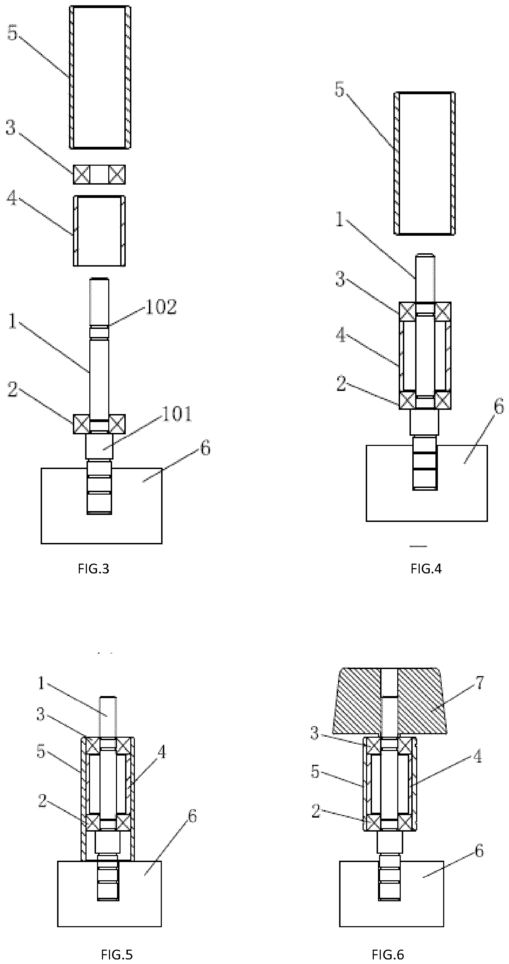

FIG.3-6 present the assembly process of high-speed rotor according to Alternative 1, wherein: I. Apply glue to the gluing groove 102 fixed on the rotary shaft 1 matching first bearing 2, then fix the first bearing in the matching area of the gluing groove, and limit the space between the inner ring of first bearing and one end of the staircase section 101 of the rotary shaft, keep the rotary shaft 6 vertically support the first bearing until the rotary shaft is glued securely to first bearing; II. Apply glue (or alternatively, apply no glue) to both ends of the said inner bushing 4, apply glue to the gluing groove 102 on the rotary shaft matching second bearing 3 as described in Step 1, load inner bushing and second bearing into the vertical rotary shaft 1, and press both ends of the inner bushing against the end faces of the outer rings of first bearing 2 and second bearing for pre-tightening, second bearing is glued to the gluing groove where it matches the rotary shaft; III. Before the rotary shaft 1is glued securely to second bearing 3 and the inner bushing 4 is glued securely to first bearing 2 and second bearing as described in Step 2, nest a standard outer bushing 5, nest a pre-tightening weight 7 on top of the rotary shaft, the said pre-tightening weight applies a pre-tightening load on the end face of the inner ring of second bearing, until the rotary shaft is glued securely to second bearing and the inner bushing is glued securely to first bearing and second bearing. After the glue hardening, dismount the standard outer bushing and the pre-tightening weight, the high-speed rotor is now successfully assembled.

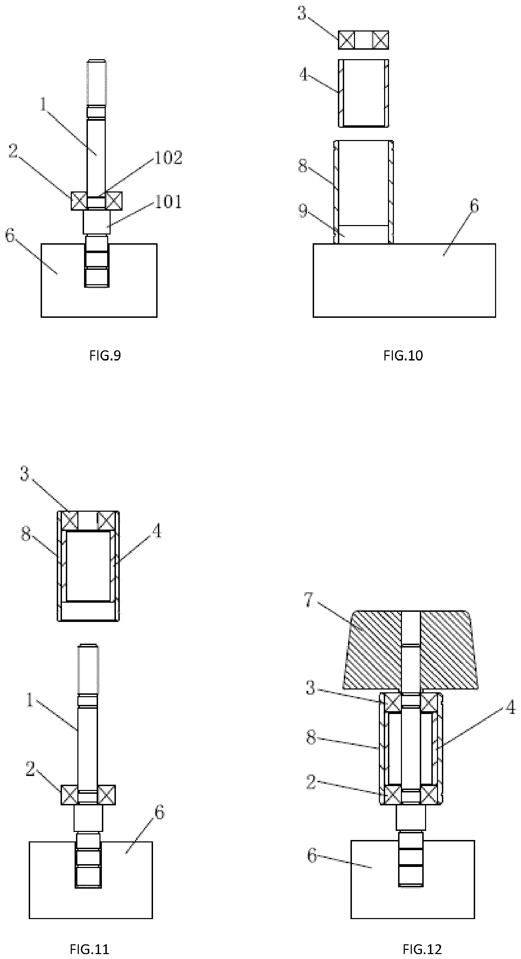

FIG.9-12 present the assembly process of high-speed rotor according to inventive Alternative 2, wherein: I. Apply glue to the gluing groove 102 fixed on the rotary shaft 1 matching first bearing 2, then fix the first bearing in the matching area of the gluing groove, and limit the space between the inner ring of first bearing and one end of the staircase section 101 of the rotary shaft, keep the rotary shaft 6 vertically support the first bearing until the rotary shaft is glued securely to first bearing: II. Take a standard bearing part 9 with the same size as the second bearing 3, the standard bearing part is pre-fixed on the rotary shaft frame 6, and an outer bushing 8 nested into the outer ring of second bearing, vertically nest the outer bushing into the standard bearing part, then place the said inner bushing 4 into the outer bushing such that it is pressed against the end face of the outer ring of the standard bearing part, apply glue on the outer ring face of second bearing, then place in the outer bushing, press the end face of the outer ring of second bearing against the end face of the inner bushing for space limit, stand still until the outer ring face of second bearing is securely glued to the inner wall of the outer bushing; III. Apply glue to the outer ring face of first bearing 2 and the gluing groove 102 of the matching second bearing 3 on the rotary shaft 1 as described in Step 1, mate the outer busing 8, second bearing, and inner bushing 4 as described in Step 2 with the said rotary shaft and first bearing, press first bearing and second bearing against both ends of the inner bushing, and insert the first bearing into the outer bushing, keep the staircase section 102 of the rotary shaft 6 vertically supporting first bearing, inner bushing and second bearing. Before the glue in the gluing groove matching the second bearing is hardened, nest a pre-tightening weight 7 on top of the vertical support of the rotary shaft, the said pre-tightening weight applies a pre-tightening load on the end face of the inner ring of the said second bearing, until the first bearing and second bearing are securely glued to the rotary shaft. After the glue hardening, dismount the pre-tightening weight, the high-speed rotor is now successfully assembled.

The above description is intended to illustrate the technical means of the present invention, rather than restrict its technical scope. Any significant improvement can be made as defined by the appended claim.

## Claims

1. A method for assembling a high-speed rotor, wherein the high-speed motor comprises a rotary shaft (1), first bearing (2), second bearing (3), an inner bushing (4) and an outer bushing (5), wherein the inner bushing (4) is of cylindrical shape, wherein the first bearing (2) and the second bearing (3) are of the same size; wherein, the said first bearing (2) and second bearing (3) are sleeved on the said rotary shaft (1) at a certain interval, and the inner ring of the first bearing has one end in contact against a staircase section (101) of the rotary shaft (1) ; wherein the said inner bushing (4) is disposed between first bearing and second bearing and provides pre-tightening force onto the end faces of the outer rings of the first bearing and of the second bearing; wherein gluing grooves (102) are disposed at the point where the said rotary shaft (1) is joined to the first bearing and to the second bearing, and wherein the rotary shaft (1) is glued securely to the first bearing and to the second bearing by the glue applied in the gluing grooves (102), such that once glued, the said inner bushing (4) retains the pre-tightening force against the end faces of the outer rings of the first bearing and of the second bearing, the method comprising the following steps:
I. Applying glue to the gluing groove (102) of the rotary shaft (1) corresponding to the first bearing (2), then fixing the first bearing (2) in the corresponding area of the gluing groove, and making the inner ring of first bearing contact one end of the staircase section (101) of the rotary shaft (1), maintaining the rotary shaft vertically to support the first bearing (2) until the rotary shaft (1) is securely glued to first bearing (2);
II. Taking a standard bearing part (9) with the same size as the second bearing (3) and an outer bushing (8) sleeved onto the outer ring of second bearing (3); vertically sleeving the outer bushing (8) onto the standard bearing part (9), then placing the said inner bushing (4) into the outer bushing (8) such that it is pressed against the end face of the outer ring of the standard bearing part (9), applying glue on the outer ring face of second bearing (3), then placing the second bearing (3) in the outer bushing (8), pressing the end face of the outer ring of second bearing (3) in contact against the end face of the inner bushing (4), standing still until the outer ring face of second bearing (3) is securely glued to the inner wall of the outer bushing (8);
III. Applying glue to the outer ring face of first bearing (2) and to the gluing groove (102) of the rotary shaft (1) corresponding to the second bearing (3) as described in Step I, mating the outer bushing (8), second bearing (3), and inner bushing (4) as described in Step II with the said rotary shaft (1) and the first bearing (2), pressing the first bearing (2) and the second bearing (3) against both ends of the inner bushing (4), and inserting the first bearing (2) into the outer bushing (8); keeping the staircase section (101) of the rotary shaft (1) vertically supporting the first bearing (2), the inner bushing (4) and second bearing (3); before the glue in the gluing groove (102) corresponding to the second bearing (3) is hardened, sleeving a pre-tightening weight (7) on top of the rotary shaft (1), the said pre-tightening weight (7) applying a pre-tightening load on the end face of the inner ring of the said second bearing (3), until the first bearing (2) and the second bearing (3) are securely glued to the rotary shaft (1); and, after the glue has become hard, dismounting the pre-tightening weight (7) so as to obtain the assembled high-speed rotor.

## Patentansprüche

1. Montageverfahren für einen Hochgeschwindigkeitsrotor, wobei der Hochgeschwindigkeitsrotor eine Drehwelle (1), ein erstes Lager (2), ein zweites Lager (3), eine Innenbuchse (4) und einen Außenbuchse (5) umfasst, wobei die Innenbuchse (4) zylinderförmig ist, wobei das erste Lager (2) und das zweite Lager (3) die gleiche Größe aufweisen; wobei diese erste Lager (2) und zweite Lager (3) auf dieser Drehwelle (1) in einem bestimmten Intervall geschoben sind, und der Innenring des ersten Lagers ein erstes Ende im Kontakt mit einem Treppenabschnitt (101) der Drehwelle (1) aufweist; wobei diese Innenbuchse (4) zwischen dem ersten Lager und dem zweiten Lager angeordnet ist und eine Vorspannkraft auf den Endseiten der Außenringe des ersten Lagers (2) und des zweiten Lagers (3) ausübt; wobei Klebenuten (102) an der Stelle angeordnet sind, wo diese Drehwelle (1) mit dem ersten Lager und dem zweiten Lager verbunden ist, und wobei die Drehwelle (1) mit dem ersten Lager und dem zweiten Lager mittels des in den Klebenuten (102) angebrachten Klebstoffs fest geklebt ist, sodass diese Innenbuchse (4), einmal geklebt, die Vorspannkraft gegen die Endseiten der Außenringe des ersten Lagers (2) und des zweiten Lagers (3) bewahrt, wobei das Verfahren die folgenden Schritte umfasst:
I. Auftragen von Kleber auf die dem ersten Lager (2) entsprechende Klebenut (102) der Drehwelle (1), dann Befestigen des ersten Lagers (2) in den entsprechenden Bereich der Klebenut, und dafür Sorgen, dass der Innenring des ersten Lagers ein Ende des Treppenabschnitts (101) der Drehwelle (1) berührt, Erhalten der Drehwelle im vertikalen Stand zur Unterstützung des ersten Lagers (2), bis die Drehwelle (1) mit dem ersten Lager (2) fest geklebt ist;
II. Nehmen eines Standardlagerteil (9) gleicher Größe wie dieser des zweiten Lagers (3) und einer Außenbuchse (8) auf dem Außenring des zweiten Lagers (3) geschoben; senkrechtes Schieben der Außenbuchse (8) auf das Standardlagerteil (9), dann Einsetzen dieser Innenbuchse (4) in die Außenbuchse (8), sodass sie gegen die Endseite des Außenrings des Standardlagerteils (9) gedrückt wird, dann Auftragen von Kleber auf die Außenringseite der zweites Lagers (3), dann Einsetzen des zweiten Lagers (3) in die Außenbuchse (8), Drücken der Endseite des Außenringes des zweiten Lagers (3) im Kontakt mit der Endseite der Innenbuchse (4), Stillstehen, bis die Außenringseite des zweiten Lagers (3) mit der Innenwand der Außenbuchse (8) fest geklebt ist;
III. Auftragen von Kleber auf die Außenringseite des ersten Lagers (2) und auf die Klebenut (102) der Drehwelle (1), die, wie beschrieben im Schritt I, dem zweiten Lager (3) entspricht, Kuppeln der Außenbuchse (8), des zweiten Lagers (3), und der Innenbuchse (4), wie im Schritt II beschrieben, mit dieser Drehwelle (1) und dem ersten Lager (2), Drücken des ersten Lagers (2) und des zweiten Lagers (3) gegen beide Enden der Innenbuchse (4), und Einsetzen des ersten Lagers (2) in die Außenbuchse (8); Erhalten des Treppenabschnitts der Drehwelle (1) im vertikalen Stand zur Unterstützung des ersten Lagers (2), der Innenbuchse (4) und des zweiten Lagers (3); vor der Kleber in den dem zweiten Lager (3) entsprechenden Klebenut (102) gehärtet ist, Schieben eines Vorspangewichtes (7) an die Oberseite der Drehwelle (1), wobei dieses Vorspangewicht (7) ein Vorspanbelastung auf die Endseite des Innenringes dieses zweiten Lagers (3) ausübt, bis das erste Lager (2) und das zweite Lager (3) auf der Drehwelle (1) fest geklebt ist, und, nachdem des Klebstoffs gehärtet worden ist, Demontieren des Vorspangewichtes (7), damit der montierte Hochgeschwindigkeitsrotor erhalten wird.

## Revendications

1. Procédé d'assemblage d'un rotor de grande vitesse, dans lequel le moteur de grande vitesse comprend un arbre rotatif (1), un premier palier (2), un deuxième palier (3), une douille intérieure (4) et une douille extérieure (5), la douille intérieure (4) étant de forme cylindrique, le premier palier (2) et le deuxième palier (3) étant de dimensions identiques; procédé dans lequel lesdits premier palier (2) et deuxième palier (3) enveloppent ledit arbre rotatif (1) à un certain intervalle, et la bague intérieure du premier palier sont présentent une extrémité en contact avec le segment en escalier (101) de l'arbre rotatif (1) ; où ladite douille intérieure (4) est disposée entre le premier palier et le deuxième palier et procure une force de pré-serrage sur les faces terminales des bagues extérieures du premier palier et du deuxième palier; où des rainures de collage (102) sont disposées au point où l'arbre rotatif rejoint le premier palier et le deuxième palier, et où l'arbre rotatif (1) est collé fermement au premier palier et au deuxième palier par la colle appliquée dans les rainures de collage (102), de sorte que une fois collée ladite douille intérieure (4) maintienne la force de pré-serrage contre les faces terminales des bagues extérieures du premier palier et du deuxième palier, le procédé comprenant les étapes suivantes :
I. Appliquer de la colle sur la rainure de collage (102) de l'arbre rotatif (1) correspondant au premier palier (2), ensuite fixer le premier palier dans la zone correspondante de la rainure de collage, faire en sorte que la bague du premier palier contacte une extrémité du segment en escalier (101) de l'arbre rotatif (1), maintenir l'arbre rotatif verticalement afin de supporter le premier palier (2) jusqu'à ce que l'arbre rotatif soit fermement collé au premier palier (2) ;
II. Prendre une pièce de palier standard (9) présentant les mêmes dimensions que le deuxième palier (3) et une douille extérieure (8) enveloppant la bague extérieure du deuxième palier (3) ; faire en sorte que la douille extérieure (8) enveloppe la pièce de palier standard (9), ensuite placer ladite douille intérieure (4) dans la douille extérieure (8) de sorte qu'elle soit pressée contre la face terminale de la bague extérieure de la pièce de palier standard (9), appliquer de la colle sur la face de bague extérieure du deuxième palier (3), ensuite placer le deuxième palier (3) dans la douille extérieure (8), presser la face terminale de la bague extérieure du deuxième palier (3) en contact avec la face terminale de la douille intérieure (4), faire reposer jusqu'à ce que la face de bague extérieure du deuxième palier (3) soit fermement collée à la paroi intérieure de la douille extérieure (8) ;
III. Appliquer de la colle à la face de bague extérieure du premier palier (2) et à la rainure de collage (102) de l'arbre rotatif (1) comme décrit à l'étape I, accoupler la douille extérieure (8), le deuxième palier (3), et la douille intérieure (4) comme décrit à l'étape II avec ledit arbre rotatif (1) et le premier palier (2), presser le premier palier (2) et le deuxième palier (3) contre les deux extrémités de la douille intérieure (4), et insérer le premier palier (2) dans la douille extérieure (8) ; maintenir le segment en escalier (101) de l'arbre rotatif (1) de sorte qu'il supporte verticalement le premier palier (2), la douille intérieure (4) et le deuxième palier (3) ; avant que la colle dans la rainure de collage (102) correspondant au deuxième palier (3) ne soit durcie, faire glisser un poids de pré-serrage (7) au sommet de l'arbre de l'arbre rotatif (1), ledit poids de pré-serrage (7) appliquant une charge de pré-serrage sur la face terminale de la bague intérieure dudit deuxième palier (3), jusqu'à ce que le premier palier et le deuxième palier (3) soient fermement collés à l'arbre rotatif (1) ; et, après que la colle a durci, démonter le poids de pré-serrage (7) de façon à obtenir le rotor de grande vitesse assemblé.
